# EUROPÄISCHE PATENTSCHRIFT

(11) **EP 1 102 724 B1**
(45) Veröffentlichungstag und Bekanntmachung des Hinweises auf die Patenterteilung: **02.04.2003**
(21) Anmeldenummer: 99945887.0
(22) Anmeldetag: 02.07.1999
(51) Int. Cl.: C02F 3/28

(54) **VERFAHREN UND ANLAGE ZUR BEHANDLUNG VON ABWASSER AUS DER ÖLFRÜCHTE- UND GETREIDEVERARBEITUNG**
METHOD AND INSTALLATION FOR TREATING WASTE WATER FROM OIL SEED AND CEREAL PROCESSING
PROCEDE ET INSTALLATION POUR LE TRAITEMENT DES MARGINES PROVENANT DU TRAITEMENT DE PLANTES OLEIFERES ET DE CEREALES

(30) Priorität: 03.07.1998 DE 19829673
(43) Veröffentlichungstag der Anmeldung: 30.05.2001
(73) Patentinhaber: Knobloch, Michael, 01159 Dresden (DE); Schmidt, Andreas, 09599 Freiberg (DE); Koch, Reinhard, D-01609 Gröditz (DE); Peukert, Volkmar, Dr., D-01307 Dresden (DE)
(72) Erfinder: Knobloch, Michael, 01159 Dresden (DE); Schmidt, Andreas, 09599 Freiberg (DE); Koch, Reinhard, D-01609 Gröditz (DE); Peukert, Volkmar, Dr., D-01307 Dresden (DE)
(74) Vertreter: Hofmann, Klaus, Dipl.-Ing.
(86) Internationale Anmeldenummer: DE9902037
(87) Internationale Veröffentlichungsnummer: WO00001622

(56) Entgegenhaltungen:
- EP-A- 0 474 325
- CH-A- 657 604
- FR-A- 2 620 439
- US-A- 4 551 250

## Beschreibung

Die Erfindung betrifft ein Verfahren und eine Anlage zur Behandlung von Abwasser aus der Ölfrüchte- und Getreideverarbeitung, insbesondere Abwasser aus der Olivenölherstellung (OMW - olive oil mill waste water), die eine weitgehende Reduzierung der umweltbelastenden Abwasserinhaltsstoffe unter Berücksichtigung ökonomischer Faktoren gewährleistet.

Das Abwasser aus der Ölfrüchte- und Getreideverarbeitung, beispielsweise aus Raps-, Sonnenblumen- oder Oliven-Ölmühlen, zeichnet sich durch eine hohe organische Fracht aus. Ein besonders Merkmal dieser Abwässer ist durch den sehr hohen suspendierten Bestandteil gegeben, bedingt durch den Herstellungsprozeß durch eine Zerkleinerung mit einem anschließenden Pressen oder Zentrifugieren. Ölfrüchte fallen saisonal während der Erntezeit, bei OMW zwischen November und März, an. Sie können toxische Bestandteile, die eine biologische Behandlung erschweren, enthalten.

Der Einsatz einer Technologie für die Ölfrüchteabwasser-Behandlung erfolgt vorrangig im ländlichen und/oder schwach industriellen Bereichen. Daraus ergeben sich bestimmte ökonomische Anforderungen.

In der Literatur werden verfahrenstechnische und apparative Lösungen für die Behandlung von OMW dargestellt, die sich auf physikalische, chemische, biochemische und biologische Methoden oder deren Kombination stützen.

In EP 0441103 A1 wird die Behandlung des OMW mittels aerober Oxydation, nachfolgender Kühlung und nachfolgender Filtration durch Kieselsand oder Aktivkohle beschrieben.

In EP 0295722 A1 wird das OMW in einem Turm im Gegenstrom von ungesättigter Luft versprüht und das dadurch entstandene Konzentrat einer Trocknung zugeführt. Es wird auf die allgemeine Veränderungen der Technologie der Ölherstellung, einhergehend mit größeren Abwassermengen und damit verbundenen geringeren Trockensubstanzgehalten des OMW verwiesen, was die Wirtschaftlichkeit dieses Verfahrens verringert.

EP 0520239 A1 beschreibt die Zugabe von Oxydationsmittel zu OMW, optional in Verbindung mit Enzymen.

In WO 96/05145 werden je m³ OMW 300 Liter natürlichen Bentonits beigemischt und so ein festes Substrat erzeugt.

In WO 95/32158 wird organischer Abfall einer anaeroben Behandlung zugeführt. Zuvor wird der Abfall mechanisch bearbeitet und wärmebehandelt. Anfallender Schlamm wird entzogen. Der vorbehandelte Abfall wird einem trichterförmigen, beheizten Behälter zugeführt. Entstehender Flüssigabfall wird aus dem Behälter abgeschlagen, mit Wasser versetzt und dem Behälter wieder zugeführt. Entstehendes Biogas wird abgeleitet. Dieses einstufige Anaerobverfahren bezieht auf die Behandlung fester organischer Abfälle.

DE 19703018 A1 beschreibt ein Verfahren zum anaeroben Vergären von Klärschlamm. Hauptaugenmerk wird dabei auf die physikalisch-chemische Entflockung des Schlammes vor, zwischen und nach den einzelnen anaeroben Gärstufen mit dem Ziel der effektiveren Vergärung gelegt. Das Verfahren strebt eine Optimierung der Klärschlammvergärung durch Auflösungsprozesse an und nicht die Reduzierung von Abwasserinhaltsstoffen durch Phasentrennung und Feststoffentnahme.

In WO 97/47561 wird ein Verfahren zur Behandlung hochbelasteter und/oder toxischer Abwässer auch aus der Ölherstellung beschrieben. Neben der Anordnung mehrerer physikalischer und chemischer Behandlungsstufen erfolgt die biologische Behandlung in ein oder mehreren aeroben, anoxischen Reaktoren bei zumindest teilweiser Kreislaufführung unter Zufuhr von Sauerstoff und Zugabe von Bakterien. Dieses Verfahren zeichnet sich durch eine Vielzahl von Verfahrensschritten sowie durch die Zugabe von Sauerstoff aus, was als sehr energieintensiv und je nach Anwendungsfall als unwirtschaftlich eingeschätzt werden kann.

Ein Forschungsbericht von AVENI [Water Res. Vol. 19 (1985), No. 5. pp. 667, 669] befaßt sich mit der anaeroben Behandlung von OMW als ein einstufiges Verfahren mit einem herkömmlichen Schlammbettreaktor.

In EP 0711732 A2 wird ein UASB-Reaktor (Upflow-Anaerobic-Sludge-Blanket) zur anaeroben Abwasserreinigung beschrieben. Ein UASB-Reaktor wird mit Modulen versehen, die die Trennung der drei Phasen Bioschlamm, Biogas und Wasser durchführen können. Im einzelnen werden technische Verbesserungen der Einbauten und der Geometrie bisheriger Konstruktionen beschrieben, die sich auf weitere Patente beziehen. Die Schlammbettbiologie weist gegenüber der Biofilmbiologie Nachteile hinsichtlich der Prozeßstabilität, saisonaler Betriebsweise und kurzen Einfahrphasen auf. Weiterhin erfolgt keine Reduzierung der organischen Last und toxischer Stoffe mit der Folge von Abwasserverdünnung oder unwirtschaftlichen Reaktorvolumina.

Eine Veröffentlichung von Gharsallah [Influence of dilution and phase separatin on the anaerobic digestion of olive mill wastewater - Bioprocess Engineering 10 (1994) pp. 29-34] bezieht sich auf die anaerobe Behandlung von OMW. Dabei steht im Vordergrund, die Einflüsse einer Abwasserverdünnung sowie einer räumlichen Auftrennung der anaeroben Abbauvorgänge in eine Versäuerungs- und einer Methanstufe zu charakterisieren. Eine Verdünnung des Abwassers durch Frischwasser ist positiv für die biologischen Abbauprozesse, führt aber zu einem erhöhten Abwasseraufkommen mit einer gewissen Restschmutzfracht im Systemablauf. Weiterhin kann sich die Bereitstellung eines zusätzlichen Wasserinputs in der Praxis in olivenölherstellenden Ländern als problematisch erweisen.

Untersuchungen an einem Blasensäulenreaktor zur Behandlung von OMW werden von Hamdi und Ellouz in [Bubble column fermentation of olive mill watewater by Aspergillus niger - J. Chem. Tech. Biotechnol. 1992, pp. 54, 331-335] beschrieben. Die Reaktorgestaltung dient unter Einsatz von Trägerkörper zum Aufwuchs der Pilzkultur Apergillus niger, welche eine Fermentation des Abwasser durch Eliminierung toxischer Inhaltsstoffe begünstigen soll. Die Untersuchungen richten sich auf die Vorbehandlung von OMW durch den Einsatz einer speziellen Pilzkultur und nicht auf eine Frachtreduzierung.

In Kampanos (Kreta - Griechenland) existiert bereits eine großtechnische Pilotanlage zur anaeroben Behandlung von OMW. Bei dem einstufige Verfahren mit einem herkömmlichen Schlammbettreaktor, werden die Abwässer in der Vorbehandlung homogenisiert und neutralisiert. Daran schließt sich ein Speicher an, von dem aus die anaeroben Stufe gleichmäßig beschickt wird. Der im Speicher sedimentierte Schlamm wird separat einer Biogasanlage zugeführt.

Die in der Literatur beschriebenen Verfahren und Anlagen zur Reinigung bzw. zur Beseitigung von Abwasser aus der Ölfrüchteverarbeitung eignen sich nur begrenzt für eine kostengünstige, prozeßstabile und effektive Frachtreduzierung und deutlicher Minderung der Belastung der Umwelt unter Nutzung des stofflichen und energetischen Potentials der Ölfrüchte.

Oxidative Behandlungsverfahren eignen sich aufgrund des hohen Energiebedarfs weniger zur Behandlung von Abwässern der Ölfrüchteverarbeitung. Ferner wird dessen energetisches Potential nicht genutzt.

Probleme werden bei den in der Literatur beschriebenen anaeroben Verfahren und Anlagen darin gesehen, daß keine wirksame Vorbehandlung, einhergehend mit einer deutlichen Reduzierung der organischen Fracht sowie toxischer Stoffe vor der Methanphase durchgeführt wird. Weiterhin werden die bekannten anaeroben Verfahren als prozeßinstabil und für eine saisonale Betriebsweise als ungeeignet eingeschätzt. Eine ausreichende Prozeßstabilität kann nur durch sehr große, unwirtschaftliche Reaktorvolumina erreicht werden. Außerdem weisen die bekannten Verfahren lange Einfahrzeiten auf.

Der Erfindung liegt die Aufgabe zugrunde, ein Verfahren und eine Anlage zu entwickeln, mit deren Hilfe bei der Behandlung von Abwasser aus der Ölfrüchte- und Getreideverarbeitung höhere physikalische, chemische, biochemische und biologische Eliminationsraten bei Nutzung dessen stofflichen und energetischen Potentials unter Berücksichtigung wirtschaftlicher Belange möglich ist. Durch den saisonbedingten Abwasseranfall soll eine kurzzeitige Inbetriebnahme möglich sein.

Erfindungsgemäß wird die Aufgabe durch den Verfahrensanspruch 1 und den Anlagenanspruch 8 gelöst. Ausgestaltende Merkmale sind in den Unteransprüchen 2 bis 7 und 9 bis 12 beschrieben.

### 1. Stufe: Versäuerung und Phasentrennung

Das zu behandelnde, frische Abwasser wird zuerst einer Vorbehandlungsstufe unterzogen.

Die in einer Versäuerungsstufe ablaufenden biochemische Vorgänge der Hydrolyse und Versäuerung bewirken ein Aufspalten organischer Verbindungen, bei der gleichzeitig durch Veränderung des elektrochemischen Potentials eine biogene Flockung der suspendierten Abwasserinhaltsstoffe angeregt wird. Die Flockung kann auf der Basis chemischer und/oder physikalischer Vorgänge verstärkt werden, beispielsweise durch Flockungsmittel. Die Abtrennung der im zu behandelnden Abwasser enthaltenen Feststoffe kann unter Zuhilfenahme von Flotation, Sedimentation, Filtration, Zentrifugation oder elektromagnetische Abscheideverfahren vorgenommen werden.

Der Einsatz von Trägerkörpern im Versäuerungsreaktor zur Ansiedlung sessiler Organismen fördert die biochemische Aufspaltung und die Prozeßstabilität. Durch den zusätzlich Eintrag geringer Mengen Luft lassen sich die Versäuerungsvorgänge zugunsten einer anaeroben methanogenen Weiterbehandlung beeinflussen. Bei dem Einsatz von Trägerkörper in der Versäuerungsstufe ist eine vorgeschaltete Flotationsstufe zur Abtrennung flotationsfähiger Bestandteile im Abwasser erforderlich. Betriebsstörungen lassen sich so vermeiden. Hier kann optional durch Erwärmung des Flotationsgas zusätzliche Effekte, wie das Ausgasen flüchtiger Bestandteile, angeregt werden.

Infolge der komplexen biochemischen und physikalischen Prozesse der Vorbehandlung findet eine erhebliche Frachtreduzierung an organischen und für die Methanbiologie toxischer Stoffe statt. Jede weitere Behandlung kann damit bei geringerer Last wirtschaftlicher und prozeßstabiler betrieben werden.

Der separierte Schlamm wird weiterbehandelt und kann stofflich, in Form von Dünger, oder energetisch zusammen mit den festen Rückständen der Ölgewinnung genutzt werden.

### 2. Stufe: Biogasstufe

Das in der ersten Stufe vorbehandelte und versäuerte Abwasser wird unter anaeroben Milieubedingungen in einer ein- oder mehrstufigen Biogasstufe biologisch weiterbehandelt. Dabei werden vorwiegend die gelösten und restlichen suspendierten Stoffe abgebaut. Zu Vergleichmäßigung von Abwasserschwankungen und einer quasikontinuierlichen Beschickung des Reaktors kann ein Zwischenspeicher vorgeschaltet werden. Die biologischen Vorgänge im Reaktor geschehen im mesophilen Temperaturbereich. In dieser Biogasstufe erfolgt eine Behandlung durch suspendierte und trägerfixierte Biomasse, wobei die Fixierung mittels einer Moving-Bed-Biofilmbiologie erfolgt. Ein Moving-Bed-Biofilmbiologie kennzeichnet sich durch den Einsatz kleiner freibeweglicher Trägerkörper mit einer hohen spezifischen Oberfläche aus.

Die Verwendung einer Biofilmbiologie durch sessile Organismen minimiert den ungewollten Austrag aktiver Biomasse und erhöht die Prozeßstabilität. Weiterhin können damit kurze Einfahrzeiten bei einer saisonalen Betriebsweise der Anlage erzielt werden. Mit dem Moving-Bed-System kann das Trägermaterial durch die Wahl der Materialdichte beliebig im Reaktor ohne technische Einbauten positioniert werden. Die freibeweglichen Körper des Moving-Bed-System lassen Gasblasen passieren und sind mechanisch durchmischbar. Das Aufwuchsträgermaterial hat die Form von zylinderförmigen Hohlkörpern und vorteilhafterweise eine theoretisch besiedelbare Oberfläche von mehr als 800 m²/m³ Schüttvolumen. In den geschützten Hohlräumen dieser Träger findet eine verstärke Ansiedlung der Organismen statt. Biogas wird abgeleitet und kann energetisch verwertet werden und ermöglicht einen weitestgehenden energieautarken Betrieb der Anlage mit Energieüberschuß.

Entsprechend den Reinigungsanforderungen und ökonomischen Verhältnissen kann daß behandelte Abwasser zur Bewässerung dienen, in kommunale Kläranlagen eingeleitet, oder in einer separaten Stufe durch aerobe Prozesse oder Filtration nachgereinigt werden.

Nachfolgend wird die Erfindung an einem Beispiel einer Versuchsanlage mit einem Tageswasserzulauf von 5 bis 40 m³ und einer CSB-Belastung zwischen 50.000 und 100.000 mg/l näher erläutert.

Das direkt ohne Zwischenspeicherung aus der Olivenölherstellung kommende Abwasser weist eine Temperatur von ca. 35°C auf und wird über einen Zulauf 1 in einen Betonbehälter 2 geleitet, in welchem die Vorbehandlung und Versäuerung stattfindet. Der zylindrische Behälter mit einem Innendurchmesser von 5 m und einer Höhe von 4 Metern ist dreifach gekammert, wobei die Unterkammerung durch eine konzentrische Trennwand sowie zwei Trennwände im Zylinderring des Behälters hergestellt wird. Alle Kammern sind hydraulisch verbunden und als korrespondierende Röhren aufzufassen. Ein Zylinderring bildet den Flotationsreaktor 3, in welchem über eine Belüftungseinrichtung Flotationsgas 17 eingeblasen wird, wodurch Flotätionsprozesse auslöst werden. Sich bildender Schwimmschlamm wird mechanisch über einen Flotationsschlammabzug 12 abgeschöpft. Die innere Kammer bildet den Versäuerungsreaktor 4. Er weist einen Innendurchmesser von ca. 3 m auf. Der Versäuerungsreaktor 4 enthält ca. 30% schwimmendes Aufwuchsträgermaterial 10, das eine Dichte um 0,9 g/cm³ und eine spezifische Oberfläche von ca. 900 m² je m³ Schüttvolumen aufweist. Die Aufwuchsträger sind 8 mm lange, zylinderförmige Hohlkörper mit in Längsrichtung außen und innen geriefter Oberfläche, einem Außendurchmesser von 5 mm und einen Innendurchmesser von 4 mm. Die Riefen sind etwa 0,6 mm tief.

Durch sich auf den Trägerkörpern bevorzugt ansiedelnde sessile Kulturen wird die Belebtschlammbildung unterstützt und stabilisiert. Dieser Reaktor wird mittels langsamdrehendem Rührer 16 durchmischt. Durch den Rühreffekt wird das Lösen der Schlammflocken vom Aufwuchsträgermaterial verstärkt. Schlamm sedimentiert und wird abgezogen. Der Rührer 16 im Versäuerungsreaktor 4 wirkt gleichzeitig als Krälwerk und fördert den Sedimentationsschlamm zum Schlammabzugskanal am Behälterboden. Die 3. Kammer bildet den Flockungsreaktor 5, der als Absetzbecken dient. Im Zulauf zum Flockungsreaktor 5 kann optional Flockungsmittel zudosiert werden. Sedimentierter Schlamm wird über einen Schlammabzug 12 abgezogen. Schwimmschlamm wird durch das umlaufende Schöpfwerk, welches auch den Flotationsreaktor 3 bedient, abgetrennt. Der pH-Wert fällt auf ca. pH 3,5 bis pH 5. Infolge der Sedimentationsund Schwimmschlammentnahme wird die Fracht auf ca. 40 bis 60 % der Eingangswerte reduziert. Die Behälter ist mit einer PE-Folie abgedeckt. Die entstehende Gasphase wird über einen Reaktorgasabzug 15 abgesaugt, mit Luft angereichert und als Verbrennungsluft zu einer Biogasanlage gefördert.

Der Schlamm wird in ein zur Basis gedichtetes Erdbecken mit einem Fassungsvolumen von ca. 100 m³ geleitet. Über einen Grobkiesfilter kann sich bildendes Wasser in den Speicher 6 laufen. Bei einer Schlammspiegelhöhe von 80 cm springt der Überlauf im Speicher 6 an.

Der Speicher 6 ist als zur Basis gedichtetes Erdbecken mit einem Fassungsvolumen von ca. 300 m³ ausgeführt. Der maximale Wasserstand beträgt 1,5 m. Aus dem Speicher 6 wird täglich eine gleichbleibende Menge von ca. 7 m³ in den Biogasreaktor 7 gefördert. Die Wasserabsaugung erfolgt ca. 10 cm unter der Wasseroberfläche. Durch eine schwimmende Absaugvorrichtung bleibt die Absaugtiefe in Relation zur Wasseroberfläche bei wechselndem Wasserstand konstant.

Der Biogasreaktor 7 ist gleichfalls wie die Vorreinigung als zylindrischer Behälter mit einem Innendurchmesser von 5 m und einer Höhe von 4 Metern ausgeführt, jedoch nur zweifach gekammert, wobei die Unterkammerung durch eine konzentrische Trennwand hergestellt wird. Die Innenkammer 8 mit einem Durchmesser von ca. 4 m weist ein Fassungsvolumen von ca. 50 m³ auf. Der Biogasreaktor 7 wird über eine Wandheizung auf ca. 36 °C beheizt und ist außen wärmegedämmt. Die CSB-Raumbelastung beträgt 2 bis 6 kg/m³*d. Der Abwasserzulauf erfolgt über ein zeitgesteuertes Pumpsystem aus dem Speicher 6 in die Innenkammer 8 am Behälterboden. Die Innenkammer 8 ist zu ca. 30% mit schwimmendem Aufwuchsträgermaterial 10 einer Dichte um 0,9 g/cm³ und zu ca. 10% mit absinkendem Aufwuchsträgermaterial 11 einer Dichte um 1,3 g/cm³ gefüllt, die eine spezifische Oberfläche von ca. 900 m² je m³ aufweisen. Die Trägerkörper 10 und 11 gewährleisten eine Biomassefixierung, verbunden mit einer Intensivierung und Stabilisierung der biologischen Abbauprozesse. Über ein langsamdrehendes Rührwerk 16 wird der Wasserkörper und die Trägerkörper durchmischt. Die Außenkammer 9 fungiert als anaerobe Nachreinigung unter Einsatz schwimmender Trägerkörper mit einer Dichte von 0,9 g/cm³. Infolge biologischer Abbauprozesse bildet sich Biogas welches über einen Biogasabzug 13 abgezogen und energetisch verwertet wird. Der Biogasreaktor 7 ist nach oben mit einer 2 mm PE-Folie gasdicht abgeschlossen. Das Gasspeichervolumen beträgt ca. 15 m³.

### Untersuchungsergebnisse

Bei Untersuchungen zur zweistufigen anaeroben Behandlung von OMW mit Feststoffabtrennung im halbtechnischen Maßstab konnten Reinigungsleistung von 92 bis 97% erreicht werden, bei einem weitestgehend geruchsstabilen Ablauf.

Mittlere Konzentrationswerte und Parameter nach den einzelnen Behandlungsstufen

| Parameter | Rohabwasser | Versäuerung | Flockung | Methanisierung |
|---|---|---|---|---|
| CSB [g/l] | 70 | 40 | 26 | 3 |
| CSB-Abbaurate [%] | 0 | 43 | 63 | 96 |
| TS-Gehalt [g/l] | 71 | 39 | 15 | 2,8 |
| Phenol [g/l] | 3 | 0,6 | 0,5 | 0,08 |
| pH | 5,4 | 4,2 | 4,6 | 7,1 |
| HRT | - | 2,5 | - | 8 |

Das Schlammaufkommen beträgt nach der Feststoffabtrennung ca. 0,2 bis 0,25 m³ pro m³ Abwasser bei einem TS-Gehalt von ca. 36 g/l. Die Produktion an Biogas mit einem Methangehalt von 65 bis 70 Vol.% durch die Methanisierung von OMW beläuft sich auf 7 bis 8 m³ Gas pro m³ Abwasser und 350 bis 400 l pro kg abgebautem CSB.

### Bezugszeichenliste

- 1: Zulauf
- 2: Vorbehandlung
- 3: Flotationsreaktor
- 4: Versäuerungsreaktor
- 5: Flockungsreaktor
- 6: Speicher
- 7: Biogasreaktor
- 8: Innenkammer
- 9: Außenkammer
- 10: aufschwimmendes Aufwuchsträgermaterial
- 11: absinkendes Aufwuchsträgermaterial
- 12: Schlammabzug
- 13: Biogasabzug
- 14: Wandheizung
- 15: Reaktorgasabzug
- 16: Rührwerk
- 17: Flotationsgas
- 18: Ablauf

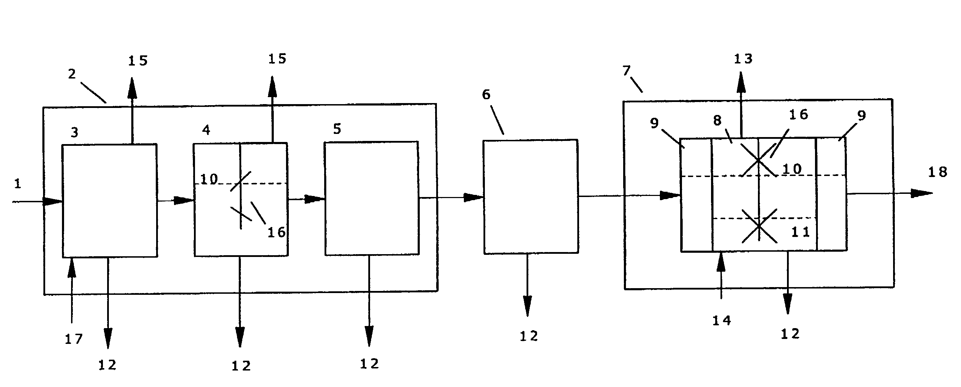

## Patentansprüche

1. Verfahren zur Behandlung von Abwasser aus der Ölfrüchteund Getreideverarbeitung mit folgenden Merkmalen:
- das zu behandelnde, frische Abwasser wird einer Vorbehandlung durch eine Versäuerung mit einer biogenen Flockung und einer Feststoffabtrennung unterzogen,
- anschließend wird das vorbehandelte Abwasser anaerobmesophil durch suspendierte und trägerfixierte Biomasse weiterbehandelt, wobei die Fixierung durch Einsatz einer Moving-Bed-Biofilmbiologie mit zylinderförmigen Hohlkörpern als Trägermaterial erfolgt und entstehendes Biogas und anfallender Schlamm abgezogen werden.

2. Verfahren nach Anspruch 1, **dadurch gekennzeichnet, daß** vor der Versäuerung eine Flotation erfolgt.

3. Verfahren nach Anspruch 2, **dadurch gekennzeichnet, daß** das Flotationsgas erwärmt wird.

4. Verfahren nach den Ansprüchen 1 bis 3, **dadurch gekennzeichnet, daß** nach der Versäuerung Flockungsmittel zugegeben werden.

5. Verfahren nach den Ansprüchen 1 bis 4, **dadurch gekennzeichnet, daß** die Versäuerung durch eine Moving-Bed-Biofilmbiologie unterstützt wird.

6. Verfahren nach den Ansprüchen 1 bis 5, **dadurch gekennzeichnet, daß** in die Versäuerung zeitweilig geringe Mengen Luft eingetragen wird.

7. Verfahren nach den Ansprüchen 1 bis 6, **dadurch gekennzeichnet, daß** das vorbehandelte Abwasser nach der Versäuerung einem Speicher zugeführt wird, in dem mengenmäßige Zulaufschwankungen gepuffert werden, Sedimentationsprozesse fortlaufen und Sedimentationsschlamm entnommen wird.

8. Anlage zur Behandlung von Abwasser aus der Ölfrüchteund Getreideverarbeitung mit folgenden Merkmalen:
- ein Zulauf (1) führt in einen Versäuerungsreaktor (4),
- im Versäuerungsreaktor (4) befinden sich eine Rühreinrichtung (16),
- der Versäuerungsreaktor (4) besitzt einen Schlammabzug (12) und einen Reaktorgasabzug (15),
- der Versäuerungsreaktor (4) ist mit einem Flockungsreaktor (5) verbunden, der einen Schlammabzug (12) besitzt,
- vom Flockungsreaktor (5) führt eine Leitung in einen Biogasreaktor (7), der eine Heizung (14) und eine Umwälzeinrichtung (16) enthält,
- der Biogasreaktor (7) besitzt einen Biogasabzug (13), einen Schlammabzug (12) und einen Ablauf (18),
- im Biogasreaktor (7) befindet sich Aufwuchsträgermaterial in Form von zylinderförmigen Hohlkörpern mit einer Dichte von < 0,95 g/cm³ sowie > 1,1 g/cm³.

9. Anlage nach Anspruch 8, **dadurch gekennzeichnet, daß** vor dem Versäuerungsreaktor (4) ein Flotationsreaktor (3) angeordnet ist, der einen Schlammabzug (12) enthält.

10. Anlage nach den Ansprüchen 8 und 9, **dadurch gekennzeichnet, daß** sich im Versäuerungsreaktor (4) Aufwuchsträgermaterial in Form von zylinderförmigen Hohlkörpern befindet.

11. Anlage nach den Ansprüchen 8 bis 10, **dadurch gekennzeichnet, daß** sich zwischen dem Flockungsreaktor (5) und dem Biogasreaktor (7) ein Speicherbehälter befindet.

12. Anlage nach den Ansprüchen 8 bis 11, **dadurch gekennzeichnet, daß** das Aufwuchsträgermaterial eine theoretisch besiedelbare Oberfläche von mehr als 800 m²/m³ Schüttvolumen besitzt.

## Claims

1. A process for treating wastewater from oil plant processing and cereal processing, having the following features:
- the fresh wastewater to be treated is subjected to a pretreatment by an acidification with a biogenic flocculation and solids removal,
- the pretreated wastewater is then anaerobically further treated by a suspended and support-immobilized biomass, being the immobilization is achieved by using a moving-bed biofilm biology with cylindrical hollow bodies as support material and resultant biogas and sludge produced being taken off.

2. The process as claimed in claim 1, wherein a flotation is performed prior to the acidification.

3. The process as claimed in claim 2, wherein the flotation gas is heated.

4. The process as claimed in claims 1 to 3, wherein flocculants are added after the acidification.

5. The process as claimed in claims 1 to 4, wherein the acidification is assisted by a moving-bed biofilm biology.

6. The process as claimed in claims 1 to 5, wherein at intervals small amounts of air are introduced into the acidification.

7. The process as claimed in claims 1 to 6, wherein the pretreated wastewater is fed after the acidification to a reservoir in which fluctuations in feed volumes are buffered, sedimentation processes proceed and sedimented sludge is taken off.

8. An installation for treating wastewater from oil plant processing and cereal processing, having the following features:
- a feed (1) leads into an acidification reactor (4),
- in the acidification reactor (4) is an agitator (16),
- the acidification reactor (4) has a sludge takeoff (12) and a reactor gas takeoff (15),
- the acidification reactor (4) is connected to a flocculation reactor (5) which has a sludge takeoff (12),
- from the flocculation reactor (5), a line leads into a biogas reactor (7) which comprises a heater (14) and a circulation apparatus (16),
- the biogas rector (7) has a biogas takeoff (13), a sludge takeoff (12) and an outlet (18),
- in the biogas reactor (7) is situated growth support material in the form of cylindrical hollow bodies having a density of < 0.95 g/cm³ and also > 1.1 g/cm³.

9. The installation as claimed in claim 8, wherein a flotation reactor (3) which comprises a sludge takeoff (12) is disposed upstream of the acidification reactor (4).

10. The installation as claimed in claims 8 and 9, wherein, in the acidification reactor (4), growth support material in the form of cylindrical hollow bodies is situated.

11. The installation as claimed in claims 8 to 10, wherein a reservoir vessel is situated between the flocculation reactor (5) and the biogas reactor (7).

12. The installation as claimed in claims 8 to 11, wherein the growth support material has a theoretically colonizable surface of more than 800 m²/m³ of bulk volume.

## Revendications

1. Procédé de traitement d'eaux résiduaires en provenance du traitement de fruits oléagineux et de céréales ayant les caractéristiques suivantes:
- l'eau résiduaire fraîche à traiter est soumise à un traitement préalable par une acidification à l'aide d'une floculation biogène et d'une séparation des matières solides,
- l'eau résiduaire ayant subi un traitement préalable est alors traitée en sus d'une manière anaérobique-mésophile par une biomasse suspendue et fixée sur un support, la fixation se faisant par utilisation d'une biologie du type Moving-Bed-Biofilm à l'aide de corps creux de forme cylindrique en tant que matériau de support, et le biogaz et la boue qui se forment étant évacués.

2. Procédé selon la revendication 1, **caractérisé en ce qu'**une flottation a lieu avant l'acidification.

3. Procédé selon la revendication 2, **caractérisé en ce que** le gaz de flottation est échauffé.

4. Procédé selon les revendications 1 à 3, **caractérisé en ce qu'**après l'acidification l'on ajoute un agent de floculation.

5. Procédé selon les revendications 1 à 4, **caractérisé en ce que** l'acidification est assistée par l'intermédiaire d'une biologie du type Moving-Bed-Biofilm.

6. Procédé selon les revendications 1 à 5, **caractérisé en ce que** l'on introduit par moments dans l'acidification des faibles quantités d'air.

7. Procédé selon les revendications 1 à 6, **caractérisé en ce que** l'eau résiduaire ayant subi un traitement préalable est acheminée après l'acidification dans un réservoir, dans lequel les oscillations d'alimentation en termes quantitatifs sont tamponnées, dans lequel les processus de sédimentation se déroulent et dans lequel la boue de sédimentation est prélevée.

8. Installation de traitement des eaux résiduaires provenant du traitement de fruits oléagineux et de céréales ayant les caractéristiques suivantes:
- une admission (1) conduit à un réacteur d'acidification (4),
- dans le réacteur d'acidification (4) se trouve une unité d'agitation (16),
- le réacteur d'acidification (4) possède une évacuation de boues (12) et une évacuation de gaz de réacteur (15),
- le réacteur d'acidification (4) est relié à un réacteur de floculation (5), qui possède une évacuation de boues (12),
- du réacteur de floculation (5) part un conduit dans un réacteur de biogaz (7), qui contient un dispositif de chauffage (14) et une unité de circulation (16),
- le réacteur de biogaz (7) possède une évacuation de biogaz (13), une évacuation de boues (12) et une vidange (18),
- dans le réacteur de biogaz (7) se trouve un matériau de support de culture sous la forme de corps creux de forme cylindrique ayant une densité < 0,95 g/cm³ ainsi que > 1,1 g/cm3.

9. Installation selon la revendication 8, **caractérisée en ce que** l'on dispose, avant le réacteur d'acidification (4), un réacteur de flottation (3), qui contient une évacuation de boues (12).

10. Installation selon les revendications 8 et 9, **caractérisée en ce qu'**un matériau de support de culture sous la forme de corps creux de forme cylindrique se trouve dans le réacteur d'acidification (4).

11. Installation selon les revendications 8 à 10, **caractérisée en ce qu'**un récipient réservoir se trouve entre le réacteur de floculation (5) et le réacteur de biogaz (7).

12. Installation selon les revendications 8 à 11, **caractérisée en ce que** le matériau de support de culture possède une surface capable d'être peuplée théoriquement de plus de 800 m²/m³ de volume en vrac.
